# DEMANDE DE BREVET EUROPEEN

(11) **EP 0 618 109 A1**
(43) Date de publication de la demande: **05.10.1994**
(21) Numéro de dépôt: 94400606.3
(22) Date de dépôt: 21.03.1994
(51) Int. Cl.: B60Q 1/52, G09F 13/22

(54) **Dispositif de signalisation pour véhicule, notamment de transport en commun**

(30) Priorité: 30.03.1993 FR 9303648
(71) Demandeur: SECURITE ET SIGNALISATION, F-37000 Tours (FR)
(72) Inventeur: Bernat, Pascal, F-37260 Monts (FR); Come, Michel, F-37230 Fondettes (FR)
(74) Mandataire: Dronne, Guy

(57) **Abrégé**

L'invention concerne un dispositif de signalisation pour véhicule, notamment de transport en commun.

Il comporte, à l'arrière du véhicule, un panneau de signalisation lumineux (10) et des moyens d'activation dudit panneau, lesdits moyens d'activation comprenant une source d'énergie électrique (12), des moyens (14) qui peuvent être commandés pour relier ladite source d'énergie audit panneau et des moyens (16) pour élaborer un signal de commande des moyens de mise en liaison en réponse à la commande de l'ouverture d'au moins une des portes dudit véhicule.

## Description

La présente invention a pour objet un dispositif de signalisation de véhicule, notamment pour véhicule de transport en commun.

On sait que, dans le cas de véhicules étant amenés à effectuer des arrêts fréquents sur la voie, qu'il s'agisse d'arrêts dans des zones urbaines ou en campagne, il est important que les autres automobilistes circulant sur cette voie soient clairement informés du fait que le véhicule est à l'arrêt et ceci quelles que soient les conditions de visibilité ou d'éclairement de la voie.

Dans le cas de véhicules de transport en commun et en particulier dans le cas de véhicules pour le transport d'enfants, il s'ajoute au fait que le véhicule est fréquemment à l'arrêt celui que les passagers de ce véhicule sont amenés à descendre à chacune des stations et que, en particulier dans le cas de transport d'enfants, on peut toujours craindre que ceux-ci ne traversent la voie sans prendre les précautions souhaitables. Dans ce dernier cas, il est donc très important d'informer les autres automobilistes de ce risque, lorsque le véhicule de transport est à l'arrêt.

On connaît déjà des équipements de signalisation pour de tels véhicules de transport en commun.

Dans les solutions connues, les éléments de signalisation ne sont pas toujours bien adaptés aux différentes conditions de visibilité. En outre, la mise en fonctionnement des moyens de signalisation à l'arrière du véhicule sont tributaires de l'actionnement d'une commande par le conducteur du véhicule. Il est donc toujours possible que le conducteur du véhicule oublie la mise en marche des moyens de signalisation, ce qui est évidemment dommageable pour la sécurité des passagers.

Un objet de la présente invention est de fournir un dispositif de signalisation pour véhicule, et notamment pour véhicule de transport en commun, qui soit efficace même en cas d'inattention de la part du conducteur de ce véhicule.

Pour atteindre ce but, selon l'invention, le dispositif de signalisation pour véhicule comporte au moins, à l'arrière du véhicule, un panneau de signalisation lumineux, des moyens de commande d'activation dudit panneau, une source d'énergie électrique et des moyens qui peuvent être commandés pour relier ladite source d'énergie audit panneau et des moyens pour élaborer un signal de commande des moyens de mise en liaison en réponse à la commande de l'ouverture d'au moins une des portes dudit véhicule.

On comprend qu'ainsi, grâce à l'invention, dès que le conducteur du véhicule commande l'ouverture d'une ou de plusieurs portes du véhicule, notamment un véhicule de transport en commun, le panneau de signalisation disposé au moins à l'arrière du véhicule est activé. On comprend également que cette commande est donc indépendante de l'attention du conducteur du véhicule et qu'elle se produit effectivement dès que les passagers du véhicule sont en situation de descendre, c'est-à-dire dès l'ouverture des portes.

Selon un mode préféré de mise en oeuvre de l'invention, le panneau de signalisation comprend au moins deux sources lumineuses et une pluralité de symboles photo-émissifs commandés séquentiellement.

Avec un tel dispositif de signalisation, les autres véhicules sont clairement informés d'une part de l'arrêt du véhicule par les sources lumineuses qui sont de préférence clignotantes et d'autre part de la nature du véhicule de transport qui est clairement indiquée par les symboles émissifs commandés séquentiellement et qui attirent encore plus l'attention des autres conducteurs automobiles.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles:
- la figure 1 est un schéma général de l'installation de commande du panneau de signalisation;
- la figure 2 est un schéma détaillé d'un mode préféré de réalisation du circuit ; et
- la figure 3 illustre le montage d'un panneau de signalisation.

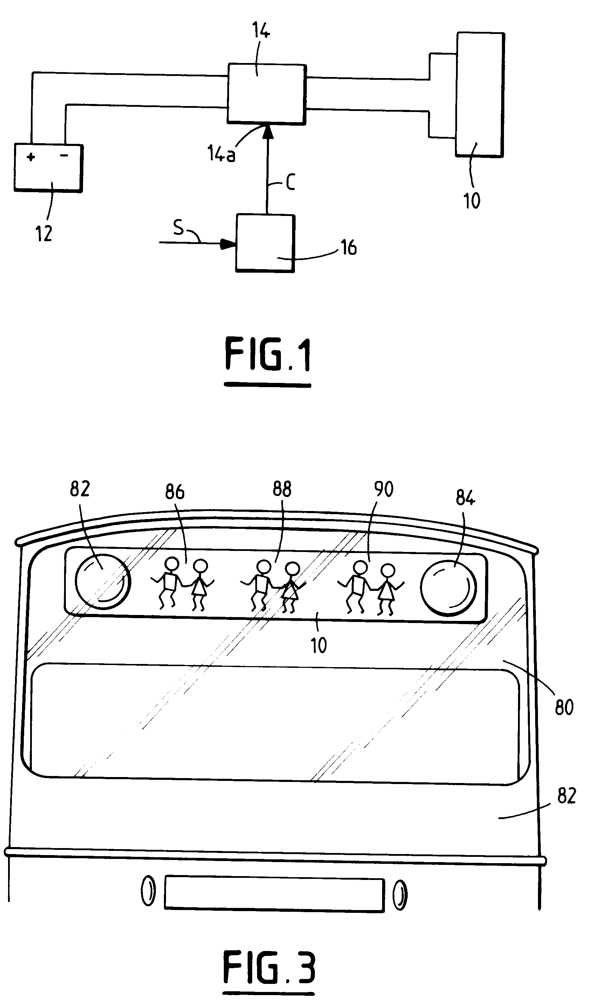

En se référant tout d'abord à la figure 1, on va décrire le principe de l'invention. Le véhicule est équipé au moins à sa partie arrière d'un panneau de signalisation 10 qui sera décrit plus en détails ultérieurement. Le panneau 10 à commande électrique est relié à une source d'énergie électrique 12 qui est, de préférence, la batterie du véhicule, par l'intermédiaire d'un dispositif de commande 14 qui, selon la nature du signal qui est appliqué sur son entrée de commande 14a, commande la liaison électrique de la source d'énergie électrique 12 avec le panneau 10 provoquant ainsi son activation ou qui, au contraire, interrompt la liaison. Le signal de commande C est élaboré par un circuit 16 qui reçoit sur son entrée le signal S résultant de la commande par le conducteur du véhicule de l'ouverture d'au moins une porte de celui-ci.

On comprend qu'ainsi, dès que le véhicule est à l'arrêt et que la commande d'une porte a été effectuée par le conducteur du véhicule, le signal de commande C est élaboré, celui-ci provoquant à son tour l'activation du panneau de signalisation 10. Il en résulte que le panneau de signalisation 10 est automatiquement commandé dès qu'au moins une porte du véhicule est ouverte, c'est-à-dire dès que les passagers du véhicule sont en situation de sortir de celui-ci. On comprend qu'ainsi l'activation effective du panneau de signalisation n'est pas tributaire de l'attention du conducteur.

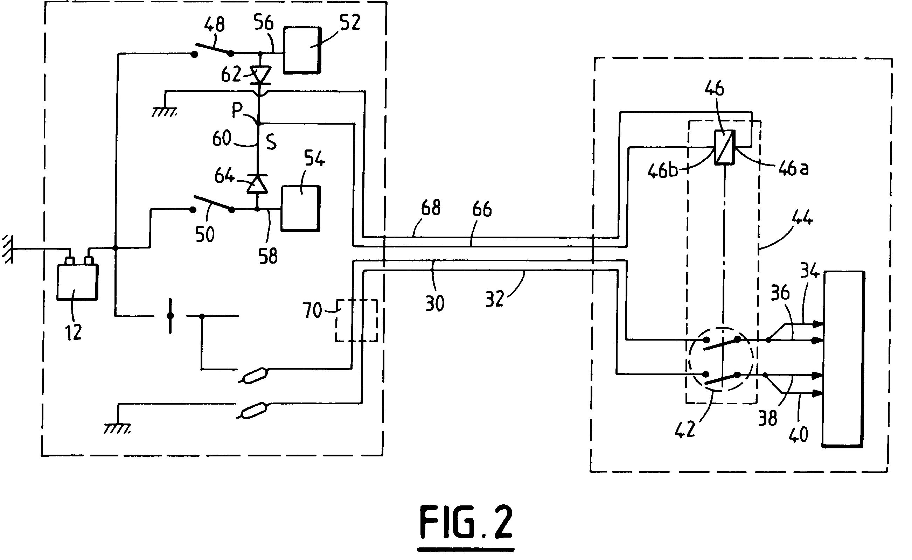

En se référant maintenant à la figure 2, on va décrire plus en détails un mode préféré de réalisation du circuit de commande illustré schématiquement par la figure 1.

Sur la figure 2, on a représenté la source d'énergie électrique 12 constituée par la batterie du véhicule. Cette batterie 12 est reliée via les câbles 30 et 32 aux différentes entrées d'alimentation 34, 36, 38, 40 du panneau de signalisation 10. Sur les câbles 30 et 32 est montée la partie commutateur 42 d'un relais 44 dont on a aussi représenté la bobine d'excitation 46. Sur cette figure, on a également représenté les interrupteurs 48 et 50 de commande d'ouverture des portes respectivement avant et arrière du véhicule. Ces commandes étant bien sûr disposées sur le tableau de bord du véhicule. Ces interrupteurs sont interposés entre la batterie 12 et des systèmes motorisés 52 et 54 qui commandent effectivement l'ouverture des portes avant et arrière. Les conducteurs 56 et 58 qui relient respectivement les interrupteurs 48 et 50 aux dispositifs moteurs 52, 54 sont reliés entre eux par un conducteur électrique 60 présentant un point milieu P. Plus précisément, le point P est relié respectivement aux conducteurs 56 et 58 par l'intermédiaire de circuits redresseurs tels que des diodes référencées 62 et 64. On comprend qu'ainsi dès qu'un des interrupteurs 48, 50 ou bien dès que les deux interrupteurs sont fermés pour commander l'ouverture d'une porte (ou des deux portes), une tension électrique S apparaît au point P. On comprend également que les diodes 62 et 64 ont pour fonction d'empêcher que la fermeture d'un des interrupteurs 48 ou 50 n'entraînent la commande simultanée des deux dispositifs moteurs de porte 52 et 54.

Le point milieu P est relié par un câble 66 à l'une des bornes d'entrée 46b de la bobine de commande 46 du relais 44. L'autre borne 46a de la bobine est reliée au neutre par le conducteur 68.

On comprend qu'ainsi, dès que le conducteur du véhicule commande la fermeture d'au moins un des interrupteurs 48 et 50, une tension S apparaît au point P qui est ainsi appliquée à la bobine 46 du relais 44. Celle-ci commande la fermeture de l'interrupteur 42, ce qui entraîne à son tour l'application de la tension d'alimentation aux bornes 34 à 40 du panneau de signalisation 10.

En variante, il est possible par exemple d'interposer un commutateur manuel 70 sur l'alimentation du panneau de signalisation 10, de telle manière que le panneau 10 ne soit pas alimenté lorsque l'on veut commander l'ouverture des portes, pendant une période prolongé, simplement par exemple pour des opérations de maintenance du véhicule, sans que celui-ci soit chargé de passagers.

En se référant maintenant à la figure 3, on a représenté un exemple de réalisation du panneau de signalisation 10. Celui-ci est par exemple monté à la partie supérieure de la lunette arrière 80 du véhicule. De préférence, le panneau 10 comporte à chacune de ses extrémités des feux 82 et 84 qui sont de préférence constitués par des sources halogènes. Ces feux ont par exemple un diamètre de 120 mm et présentent un entr'axe de 1000 mm. Ces feux sont de préférence commandés de telle manière qu'ils clignotent. Entre les feux 82 et 84, on a prévu par exemple trois groupes de figurines 86, 88, 90 qui sont de préférence constitués par des extrémités de fibres optiques. Pour augmenter l'efficacité de la signalisation, les figurines 86, 88 et 90 sont de préférence alimentées de façon séquentielle.

## Revendications

1. Dispositif de signalisation pour véhicule, notamment de transport en commun pour informer de la sortie de passagers hors du véhicule, caractérisé en ce qu'il comporte, à l'arrière du véhicule, un panneau de signalisation lumineux (10) comprenant une pluralité de symboles photo-émissifs (86 à 90) commandés séquentiellement et des moyens d'activation dudit panneau, lesdits moyens d'activation comprenant une source d'énergie électrique (12), des moyens (14, 44) qui peuvent être commandés pour relier ladite source d'énergie audit panneau et des moyens (16, 60, 62, 64) pour élaborer un signal de commande des moyens de mise en liaison en réponse à la commande de l'ouverture d'au moins une des portes dudit véhicule.

2. Dispositif de signalisation selon la revendication 1, caractérisé en ce que les moyens de liaison qui peuvent être commandés comprennent un relais (44) dont l'élément de commande (46) reçoit ledit signal de commande et dont l'interrupteur (42) est monté entre ladite source d'énergie (12) et l'entrée électrique dudit panneau (34, 40).

3. Dispositif de signalisation selon l'une quelconque des revendications 1 et 2, caractérisé en ce que ledit panneau (10) comprend en outre au moins deux sources lumineuses (82, 84).

4. Dispositif de signalisation selon l'une quelconque des revendications 1 à 3, caractérisé en ce que ladite source d'énergie électrique (12) est la batterie du véhicule.

5. Dispositif de signalisation selon l'une quelconque des revendications 1 à 4, caractérisé en ce que les moyens d'élaboration du signal de commande (56, 58) comprennent une conducteur électrique (60) pour relier les lignes de commande (56, 58) des systèmes d'ouverture de porte et un deuxième conducteur (66) pour relier un point (P) dudit premier conducteur à l'entrée (46b) des moyens (44) qui peuvent être commandés, ledit point étant relié à chacune desdites lignes de commande par des moyens formant diode (62, 64).
